# EUROPÄISCHE PATENTSCHRIFT

(11) **EP 2 583 916 B1**
(45) Veröffentlichungstag und Bekanntmachung des Hinweises auf die Patenterteilung: **27.07.2016**
(21) Anmeldenummer: 12189160.0
(22) Anmeldetag: 19.10.2012
(51) Int. Cl.: B65G 21/20

(54) **Führungsvorrichtung für Behälter, insbesondere für Flaschen, Dosen, Getränkekartons und/oder Kartonagen**
Guidance device for containers, in particular for bottles, cans, beverage cartons and/or cartons
Dispositif de guidage pour récipients, notamment pour bouteilles , boîtes, cartons à boissons et/ou cartonnages

(30) Priorität: 20.10.2011 DE 102011054639
(43) Veröffentlichungstag der Anmeldung: 24.04.2013
(73) Patentinhaber: Krones AG, 93073 Neutraubling (DE)
(72) Erfinder: Zeitler, Felix, 93073 Neutraubling (DE)
(74) Vertreter: Nordmeyer, Philipp Werner

(56) Entgegenhaltungen:
- EP-A1- 2 361 857
- EP-B1- 1 758 804
- EP-B1- 1 799 597
- DE-A1- 10 118 565
- US-A- 3 647 051

## Beschreibung

### Technisches Gebiet

Die vorliegende Erfindung betrifft eine Führungsvorrichtung für Behälter, insbesondere für Glasflaschen, Kunststoffflaschen, Dosen, Getränkekartons und/oder Kartonagen, wie sie insbesondere im Bereich von Reinigungs-, Sterilisierungs-, Füll-, Verschließ-, Etikettier- und/oder Inspektionsvorrichtungen bei der Getränkeabpackung Verwendung findet.

### Stand der Technik

Im Bereich der Getränkeabfüllung werden die jeweils zu befüllenden Behälter, also insbesondere Glasflaschen, Kunststoffflaschen, Dosen, Getränkekartons und/oder Kartonagen, typischerweise mittels Fördereinrichtungen durch die jeweiligen Befüllungsanlagen hindurch geführt. Diese Fördereinrichtungen fördern die jeweiligen Behälter entlang vorgegebener Pfade, wobei die eigentliche Förderung der Behälter dann beispielsweise über Förderbänder bzw. Fördersterne vorgenommen wird. Um die jeweiligen Behälter auf dem vorgegebenen Pfad zu halten, oder, im Falle der Verwendung eines Fördersterns, um ein tangentiales Auswandern der jeweiligen Behälter aus dem Eingriffsbereich des Fördersterns zu verhindern, sind Führungsvorrichtungen vorgesehen, welche den vorgegebenen Weg der Behälter auf einer Seite bzw. auf beiden Seiten begrenzen. Mittels dieser Führungsvorrichtungen wird so erreicht, dass ein Behälter, welcher vom vorgegebenen Pfad abzuweichen droht, wieder auf den Pfad zurückgeführt wird, oder aber es findet ein ständiger Kontakt zwischen den Behältern und der Führungsvorrichtung statt, um eine präzise Führung zu ermöglichen.

Solche Führungsvorrichtungen werden im gesamten Prozessablauf bei einer Behälterbehandlungsvorrichtung, wie beispielsweise einer Reinigungs-, Sterilisierungs-, Füll-, Verschließ-, Etikettier- und/oder Inspektionsvorrichtung, eingesetzt.

Auch die entsprechenden Weichen- bzw. Flusssteuerungen des jeweiligen Behälterstromes können über solche Führungsvorrichtungen vorgenommen werden.

Aus der WO 2006/056372 A1 ist eine Fördereinrichtung bekannt, welche prinzipiell eine Führungsvorrichtung zum Führen von Behältern beschreibt. Bei der Behälterführung handelt es sich hier um eine auswechselbare Führung, bei welcher ein Führungsrahmen vorgesehen ist, der mit einem Rahmen der Fördereinrichtung verriegelbar ist. Eine Führungsschiene ist mit dem Führungsrahmen fest verbunden, welche eine Leitfläche zum Führen der Behälter bereitstellt.

Üblicherweise sind die jeweiligen Behälterbehandlungsvorrichtungen, und insbesondere die Befüllungsanlagen, so ausgebildet, dass sie unterschiedliche Behältergrößen bzw. unterschiedliche Behältertypen handhaben können. In solchen Anlagen können unterschiedliche Flaschengrößen vorbehandelt, befüllt, verschlossen und etikettiert werden. Hierzu ist es notwendig, die jeweiligen Führungsvorrichtungen an die entsprechenden Flaschengrößen bzw. Flaschendurchmesser anzupassen, um einen störungsfreien und präzisen Lauf der jeweiligen Behälter durch die Behälterbehandlungsvorrichtung zu ermöglichen.

Die WO 2006/056372 A1 schlägt hierzu vor, eine entsprechende Führungsvorrichtung mehrteilig auszubilden und diese auswechselbar und am jeweiligen Rahmen der Fördereinrichtung verriegelbar auszugestalten. Auf diese Weise kann die Führungsvorrichtung an die entsprechenden jeweiligen geometrischen Erfordernisse der Behälter angepasst werden.

Nachteilig an dieser Lösung ist jedoch, dass sowohl der typischerweise aus Edelstahl bestehende Führungsrahmen, als auch das an den Führungsrahmen angebrachte, meist aus Kunststoff bestehende Verschleißteil, welches die eigentliche Leitfläche ausbildet, komplett ausgewechselt werden müssen, um eine Behälterbehandlungsvorrichtung für einen anderen Behältertyp zu rüsten. Weiterhin müssen für jede Behältergröße entsprechend jeweils Führungsvorrichtungen vorgehalten werden. Dies ist zum einen kostenaufwändig, da hier neben der Kunststoffkonstruktion für das Verschleißteil auch eine Edelstahlkonstruktion für den Führungsrahmen jedes Behältertyps vorgehalten werden muss, und zum anderen ist der Platzaufwand für die Lagerung der entsprechenden Führungsvorrichtungen groß.

Die DE 101 18 565 A1 offenbart eine Fördervorrichtung zur Seitenführung.

Die EP 2 361 857 A1 offenbart eine verstellbare Förderführungsschieneneinheit.

Die EP 1 799 597 B1 offenbart eine verstellbare Förderführungsschieneneinheit.

### Darstellung der Erfindung

Ausgehend vom genannten Stand der Technik ist es eine Aufgabe der vorliegenden Erfindung, eine Führungsvorrichtung für Behälter anzugeben, welche eine effiziente Anpassung an unterschiedliche Behältergrößen ermöglicht.

Diese Aufgabe wird durch eine Führungsvorrichtung mit den Merkmalen des Anspruchs 1 gelöst. Vorteilhafte Weiterbildungen der Führungsvorrichtung sind in den Unteransprüchen angegeben.

Entsprechend umfasst die Führungsvorrichtung für Behälter, insbesondere für Glasflaschen, Kunststoffflaschen, Dosen, Getränkekartons und/oder Kartonagen, mindestens einen Führungsrahmen, welcher mit einem Maschinenrahmen einer Behälterbehandlungsvorrichtung verbindbar ist. An dem Führungsrahmen ist mindestens eine Führungsschiene mit einer Leitfläche zum Führen der Behälter angeordnet. Erfindungsgemäß ist die Führungsschiene auswechselbar und am Führungsrahmen verriegelbar.

Durch die Ausbildung der Führungsschiene als auswechselbares und am Führungsrahmen verriegelbares Element wird eine effiziente Anpassung der jeweiligen Führungsvorrichtung an die jeweiligen Behältergrößen durch ein Auswechseln entsprechend dimensionierter Führungsschienen möglich. Dadurch kann der Materialeinsatz gegenüber den vorbekannten Lösungen deutlich reduziert werden, da nicht mehr der typischerweise aus Metall und insbesondere aus einem Edelstahl bestehende Führungsrahmen zusammen mit der Führungsschiene ausgewechselt werden muss um die Führungsvorrichtung umzurüsten, sondern es muss lediglich die typischerweise aus einem Kunststoff bestehende Führungsschiene selbst ausgewechselt werden. Durch die Verriegelung der Führungsschiene am Führungsrahmen kann dies entsprechend schnell und einfach durchgeführt werden und kann insbesondere in einer bevorzugten Ausgestaltung auch vollständig ohne den Einsatz von Werkzeug durchgeführt werden. Hierdurch ergibt sich auch eine Reduzierung der Rüstzeiten. Da nur die Führungsschienen an die unterschiedlichen Behältergeometrien angepasst werden, kann zudem das Lagervolumen für die unterschiedlichen Behälterrüstteile deutlich verringert werden.

Durch die am Führungsrahmen verriegelbar ausgebildete Gestaltung der Führungsschiene kann darüber hinaus eine schnelle Umrüstung der jeweiligen Fördervorrichtung auf die entsprechenden Förderbedingungen, und insbesondere die entsprechenden Behälter, vorgenommen werden. Die umzurüstenden Teile sind darüber hinaus auch wesentlich leichter als die vorbekannten Führungen, so dass sich die Handhabung der Führungsvorrichtung bei der Umrüstung bzw. auch bei der Wartung deutlich vereinfacht.

Unter Fördervorrichtungen sind hier jegliche Vorrichtungen zu verstehen, welche zur Förderung von zu befüllenden Behältern, also insbesondere Glasflaschen, Kunststoffflaschen, Dosen, Getränkekartons und/oder Kartonagen, geeignet sind. Zu den Fördervorrichtungen zählen beispielsweise Förderbänder, Fördersterne und/oder Fördergreifer. Jegliche andere geeignete Fördervorrichtungen können jedoch ebenfalls zusammen mit der hier beschriebenen Führungsvorrichtung verwendet werden.

Die Führungsschiene ist am Führungsrahmen über eine Rastvorrichtung verriegelbar. Auf diese Weise kann eine besonders einfache und effiziente Handhabung der Führungsvorrichtung erreicht werden, da durch die Verrastung eine einfache und gleichzeitig betriebssichere Verbindung der Führungsschiene am Führungsrahmen erreicht werden kann. Die Rastvorrichtung ist als ein an dem Führungsrahmen und/oder an der Führungsschiene unverlierbar angeordneter, federvorgespannter Bolzen ausgebildet. Durch die Verwendung einer solchen, fest mit dem Führungsrahmen verbundenen Rastvorrichtung können die jeweiligen Führungsschienen einfach ausgewechselt werden und es ergibt sich eine effiziente Handhabung mit reduzierten Rüstzeiten, da keine separaten Befestigungsteile angebracht werden müssen.

Durch die unverlierbare Verbindung der Rastvorrichtung an dem Führungsrahmen und/oder der Führungsschiene kann zudem eine höhere Betriebssicherheit erreicht werden, da keine Teile zur Befestigung der Führungsschienen vergessen werden können und auch keine Teile in den Produktionsablauf gelangen können. Im Gegensatz zum vorbekannten Stand der Technik stellt dies eine erhebliche Vereinfachung der Montage und Demontage der jeweiligen Führungsschienen dar, so dass die Rüstzeiten zur Umrüstung der Behälterbehandlungsvorrichtung deutlich reduziert werden können. Mittels eines nichtverlierbaren Rastbolzens kann weiterhin die Handhabung der Führungsvorrichtung deutlich vereinfacht werden, da sämtliche Teile des Verriegelungsmechanismus am Führungsrahmen verbleiben und der Rastbolzen lediglich in eine dafür vorgesehene Rastvertiefung in der Führungsschiene einrasten muss, um eine Gesamtverriegelung zu erreichen.

Ferner ist eine formschlüssige Schiebeverbindung zwischen dem Führungsrahmen und der Führungsschiene vorgesehen, welche eine Verbindung der Führungsschiene mit dem Führungsrahmen ermöglicht. Die Schiebeverbindung kann dabei insbesondere so ausgebildet sein, dass in dem Führungsrahmen mindestens eine Aufnahme vorgesehen ist, in welche ein dazu korrespondierendes Befestigungsmittel der Führungsschiene derart eingeschoben werden kann, dass ein fester Sitz der Führungsschiene am Führungsrahmen in der vollständig eingeschobenen Position in der Aufnahme erreicht wird. Durch die einfache formschlüssige Schiebeverbindung wird das Auswechseln der Führungsschienen weiter vereinfacht, da hier nur einfache Handgriffe durchzuführen sind und die Führungsschiene lediglich entlang der Aufnahme geführt werden muss, um in die Verriegelungsposition zu gelangen.

In einer bevorzugten Ausgestaltung weist die Führungsschiene eine Nut auf, in welche der Führungsrahmen zumindest teilweise einführbar ist. Bevorzugt weist die Nut mindestens ein Befestigungsmittel, insbesondere einen Bolzen, auf, welches in die Nut hineinragt und welches in eine zum Befestigungsmittel komplementäre Aufnahme, insbesondere eine hakenförmige Ausnehmung, am Führungsrahmen einführbar ist. Auf diese Weise lässt sich eine stabile, einfach herzustellende und einfach zu reinigende Ausgestaltung der Verbindung zwischen der Führungsschiene und dem Führungsrahmen herstellen, wobei die Handhabung besonders einfach ist, da die Führungsschiene mit der Nut quasi nur auf den Führungsrahmen "aufgesteckt" werden muss.

In einer weiteren bevorzugten Ausbildung sind mindestens zwei Führungsschienen an mindestens einem Führungsrahmen angeordnet und wenigstens zwei der Führungsschienen sind über eine einzige Rastvorrichtung am Führungsrahmen verriegelbar. Die Verriegelung von mindestens zwei Führungsschienen über eine einzige Rastvorrichtung hat den Vorteil, dass zumindest zur Demontage der Führungsschienen nur eine einzige Rastvorrichtung gelöst werden muss und dann alle damit gehaltenen Führungsschienen entnommen werden können. Bevorzugt stehen dabei entsprechend mindestens zwei Führungsschienen über mindestens einen Verriegelungsanschlag miteinander in Kontakt, wobei die Rastvorrichtung nur mit einer der Führungsschienen in Eingriff bringbar ist, und die andere Führungsschiene durch die mit der Rastvorrichtung in Eingriff stehende Führungsschiene in der Verriegelungsposition verriegelbar ist.

In einer weiteren Variante sind mindestens zwei Führungsschienen vorgesehen, welche gegeneinander auswechselbar sind und welche jeweils an der gleichen Position am Führungsrahmen verriegelbar sind, wobei mindestens zwei der Führungsschienen unterschiedliche Dimensionen aufweisen und bevorzugt deren Leitflächen einen sich voneinander unterscheidenden Abstand vom Führungsrahmen aufweisen. Die unterschiedlich dimensionierten Führungsschienen ermöglichen so eine einfache und effiziente Anpassung der Führungsvorrichtung an die jeweilige Behältergröße, da nur die Führungsschienen an die jeweilige zu führende Behältergröße angepasst werden müssen, nicht aber der Führungsrahmen. Die mindestens zwei entsprechend dimensionierten Führungsschienen können dann bei einer Umrüstung der jeweiligen Führungsvorrichtung auf eine andere Behältergröße einfach gegeneinander ausgetauscht werden. Dabei ist beispielsweise mindestens eine erste Führungsschiene mit einem ersten Abstand ihrer Leitfläche von dem Führungsrahmen für erste Behälter vorgesehen, und mindestens eine zweite Führungsschiene mit einem kleineren Abstand zwischen Leitfläche und Führungsschiene ist zur Führung von zweiten Behältern vorgesehen, wobei die zweiten Behälter größer dimensioniert sind, als die ersten Behälter. Entsprechend müssen für eine Umrüstung der Führungsvorrichtung auf unterschiedliche Behältergrößen nur die typischerweise aus einem Kunststoff ausgebildeten Führungsschienen gegeneinander ausgetauscht werden. Die typischerweise aus Edelstahl ausgebildeten Führungsrahmen müssen hingegen nicht ausgetauscht werden.

In einer weiteren vorteilhaften Ausprägung sind mindestens zwei unterschiedliche Führungsrahmen vorgesehen, welche alternativ austauschbar mit dem Maschinenrahmen verbindbar sind, wobei die zwei Führungsrahmen zur Führung unterschiedlicher Behälterhöhen ausgebildet sind. Da sowohl der Führungsrahmen auswechselbar und am Maschinenrahmen verriegelbar ist, als auch die einzelnen Führungsschienen an den oder dem jeweiligen Führungsrahmen auswechselbar und verrastbar sind, ergibt sich hieraus ein flexibles, modulares System, bei welchem nur die jeweils notwendigen Komponenten schnell, durch die Rastverbindung einfach und effizient, ausgewechselt werden können, um eine zuverlässige Führung der jeweiligen Behälter durch die Führungsvorrichtung zu erreichen, bei gleichzeitig reduzierten Rüstzeiten.

Die oben gestellte Aufgabe wird auch durch eine Fördervorrichtung für Behälter mit den Merkmalen des Anspruchs 11 gelöst. Unter Fördervorrichtungen sind hier jegliche Vorrichtungen zu verstehen, welche zur Förderung von zu befüllenden Behältern, also insbesondere Glasflaschen, Kunststoffflaschen, Dosen, Getränkekartons und/oder Kartonagen, geeignet sind. Zu den Fördervorrichtungen zählen beispielsweise Förderbänder, Fördersterne und/oder Fördergreifer.

Weiterhin wird die oben gestellte Aufgabe durch einen Satz von mindestens zwei Führungsschienen mit den Merkmalen des Anspruchs 12 gelöst. Durch die Bereitstellung des entsprechenden Satzes von mindestens zwei gegeneinander auswechselbaren und an der gleichen Position an einem Führungsrahmen verriegelbaren Führungsschienen kann eine einfache Anpassung einer Führungsvorrichtung an unterschiedliche Behältergeometrien und/oder unterschiedliche Behälterdimensionen erreicht werden. Beispielsweise lässt sich eine Führungsvorrichtung durch die gegeneinander auswechselbaren Führungsschienen schnell von einer zu einer anderen Behältergeometrie umrüsten.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische, perspektivische Darstellung einer Führungsvorrichtung gemäß einem ersten Ausführungsbeispiel;
- Figur 2: eine schematische Ausschnittsvergrößerung des Verriegelungsmechanismus der Figur 1;
- Figur 3: eine schematische, perspektivische Darstellung eines Führungsrahmens;
- Figur 4: eine schematische Draufsicht auf eine Führungsschiene;
- Figur 5: eine schematische Schnittansicht durch die Führungsschiene der Figur 4 entlang der Linie A-A;
- Figur 6: eine schematische, perspektivische Ansicht der Führungsschiene der Figuren 4 und 5; und
- Figur 7: eine schematische, perspektivische Darstellung einer weiteren Ausführungsform der Führungsvorrichtung.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet und auf eine wiederholte Beschreibung dieser Elemente wird teilweise verzichtet, um Redundanzen in der Beschreibung zu vermeiden.

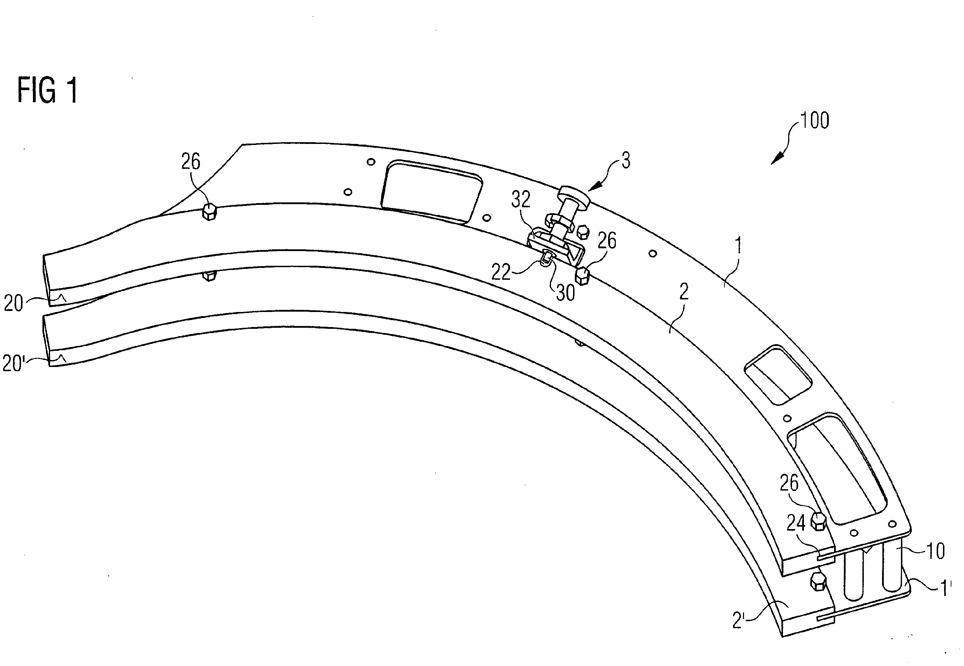

Figur 1 zeigt schematisch eine Führungsvorrichtung 100 gemäß einem Ausführungsbeispiel der vorliegenden Erfindung.

Die Führungsvorrichtung 100 weist in dem gezeigten Ausführungsbeispiel einen Führungsrahmen 1 sowie eine Führungsschiene 2 auf, wobei die Führungsschiene 2 auswechselbar ist und am Führungsrahmen 1 verriegelt ist. Die Führungsschiene 2 weist eine Leitfläche 20 auf, welche die tatsächliche Führung der Behälter, insbesondere der Glasflaschen, Kunststoffflaschen, Dosen, Getränkekartons und/oder Kartonagen, übernimmt, und mit welcher die jeweiligen Behälter in Kontakt kommen.

Die Verriegelung der Führungsschiene 2 am Führungsrahmen wird über eine Rastvorrichtung 3 erreicht, welche in dem gezeigten Ausführungsbeispiel als federbelasteter Rastbolzen 30 ausgebildet ist.

Der Rastbolzen 30 ist in Verriegelungsrichtung vorgespannt und über einen Haltemechanismus 32 unverlierbar mit dem Führungsrahmen 1 verbunden. Mit anderen Worten ist die Rastvorrichtung 3 so ausgebildet, dass eine Verrastung der Führungsschiene 2 am Führungsrahmen dann automatisch vor sich geht, wenn der Rastbolzen 30 in eine zum Rastbolzen 30 komplementäre Rastausnehmung 22 durch die Vorspannung eingeschoben wird.

Figur 1 zeigt exemplarisch einen Abschnitt einer Führungsvorrichtung 100, welcher kreisbogenförmig ausgebildet ist. Ein solcher kreisbogenförmiger Abschnitt kann beispielsweise im Bereich eines Fördersternes oder eines Führungssternes als Außenführung für die jeweiligen Behälter eingesetzt werden. Selbstverständlich ist die vorliegende Erfindung nicht beschränkt auf die exemplarisch gezeigte kreisbogenförmige Führungsvorrichtung 100, sondern sie kann auch als lineare, mäanderförmige oder anderweitig geformte Führungsvorrichtung ausgebildet sein.

Figur 1 zeigt in dem Ausführungsbeispiel der Führungsvorrichtung 100 zwei übereinander angeordnete Führungsrahmen 1 und 1', welche entsprechend zwei übereinander angeordnete Führungsschienen 2, 2' tragen. Die übereinander angeordneten Führungsrahmen 1, 1' sind mittels Verbindungsbolzen 10 miteinander verbunden und dadurch gleichzeitig in einem festen Abstand voneinander beabstandet so angeordnet, dass zwischen den beiden Führungsschienen 2, 2', und insbesondere zwischen deren jeweiligen Leitflächen 20, 20', ein fester Abstand bereitgestellt wird. Der Abstand hängt unter anderem von der Geometrie der jeweiligen Behälter ab und wird typischerweise bei höheren Behältern größer gewählt, als bei niedrigeren Behältern.

Je nach Anordnung der Führungsvorrichtung 100 im Förderweg der entsprechenden Behälterbehandlungsvorrichtung können neben den in der Figur 1 gezeigten zwei Führungsschienen 2, 2' auch mehr als zwei Führungsschienen, oder lediglich eine einzige Führungsschiene, vorgesehen sein. Die Anzahl und Anordnung der Führungsschienen hängt dabei von der Geometrie der zu führenden Behälter und von der jeweiligen Anwendung ab.

In dem Beispiel der Figur 1 sind die Leitflächen 20, 20' im Wesentlichen parallel zueinander geführt. Es kann jedoch in besonderen Ausgestaltungen oder bei bestimmten Behältergeometrien notwendig sein, die Leitflächen 20, 20' voneinander abweichend auszubilden, beispielsweise die untere Leitfläche 20' gegenüber der oberen Leitfläche 20 nach hinten springend, oder aber, wenn beispielsweise eine Kippung des jeweiligen Behälters gewünscht wird, auch eine über den Weg hinweg veränderliche geometrische Beziehung zwischen der unteren Leitfläche 20' und der oberen Leitfläche 20, um die entsprechenden geometrischen Vorgaben zu erfüllen.

Der Führungsrahmen 1, 1' ist bevorzugt aus einem metallischen Material, insbesondere aus Edelstahl, hergestellt, um eine einfache Reinigung und Sterilisierung sowie eine hohe Stabilität bereit zu stellen. Die Führungsschiene 2, 2' ist bevorzugt aus einem Kunststoffmaterial hergestellt, um die Reibung mit den Behältern niedrig zu halten und Beschädigungen der Behälter zu vermeiden. Die Führungsschiene 2, 2' ist bevorzugt als Verschleißteil angelegt, welches den ständigen Reibungs- und Scheuerbewegungen der Behälter ausgesetzt ist und entsprechend turnusgemäß ausgetauscht werden muss.

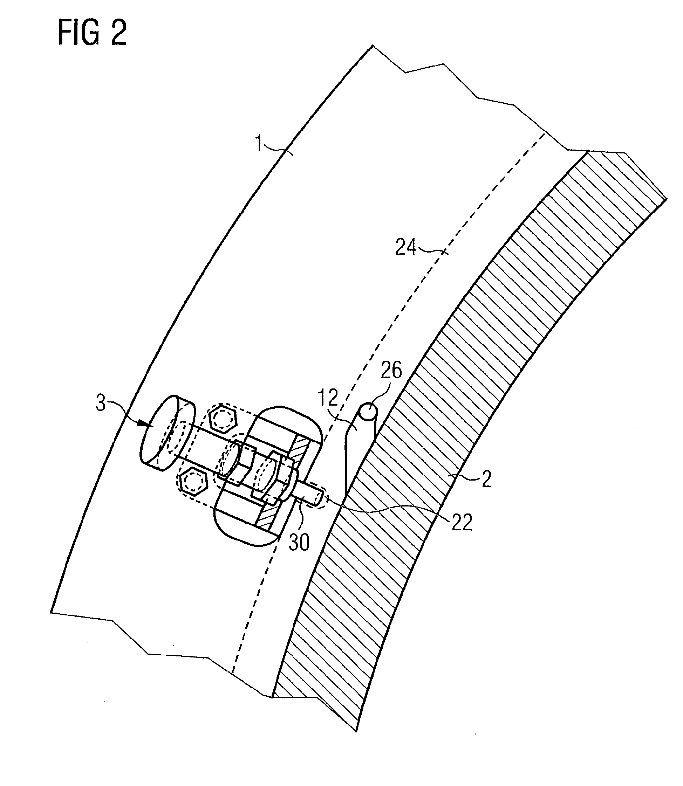

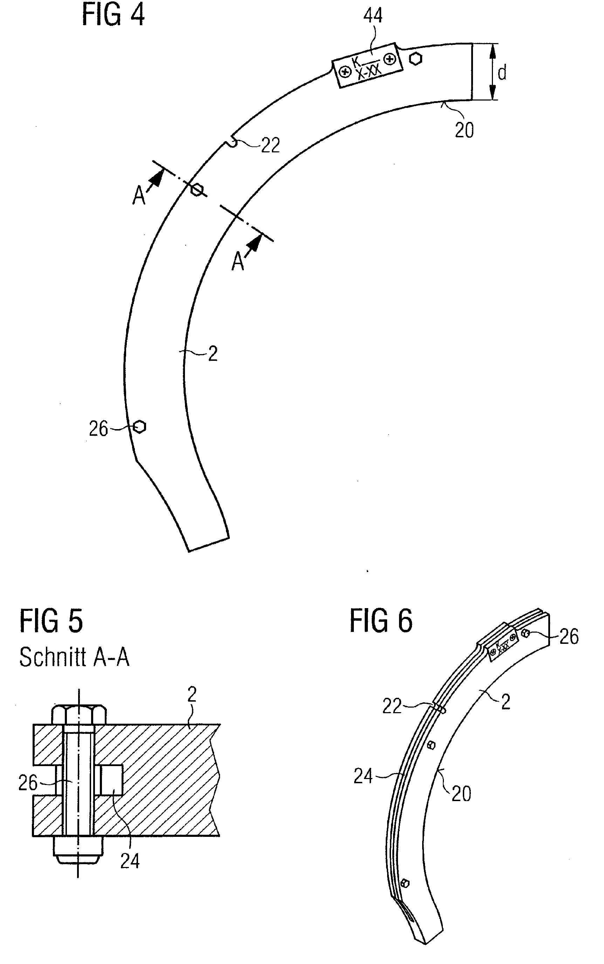

Der Verriegelungsmechanismus ist in Figur 2 noch einmal detaillierter gezeigt. Hier sind der Führungsrahmen 1, die Rastvorrichtung 3 sowie - in einer teiltransparenten Darstellung - die Führungsschiene 2 gezeigt. Die Führungsschiene 2 weist, wie sich auch aus den nachfolgend beschriebenen Figuren 4 bis 6 ergibt, eine Nut 24 sowie Befestigungsmittel 26 in Form eines die Nut 24 überspannenden Bolzens auf. Die Befestigungsmittel 26 sind in Figur 1 an den Positionen angeordnet, an welchen die Maschinenschrauben auf der Oberfläche der Führungsschiene 2 liegen. In Figur 1 ist weiterhin ebenfalls schematisch die Nut 24 der Führungsschiene 2 zu erkennen, in welche ein Abschnitt des Führungsrahmens 1 eingeführt ist. In einer nicht gezeigten Variante oder Weiterbildung kann der Führungsrahmen 1 mit einer Nut versehen sein, in welche eine an der Führungsschiene 2 angebrachte Feder eingeführt werden kann.

Figur 2 zeigt die Führungsschiene 2, welche auf den Führungsrahmen 1 aufgeschoben ist, derart, dass die Nut 24 vom Führungsrahmen 1 vollständig ausgefüllt wird. Weiterhin weist der Führungsrahmen 1 eine Aufnahme 12 in Form einer hakenförmigen Ausnehmung auf, in welche das Befestigungsmittel 26 der Führungsschiene 2 mittels einer Schiebebewegung eingeschoben werden kann. Wenn das Befestigungsmittel 26 vollständig in die Aufnahme 12 eingeschoben ist, wird eine formschlüssige Verbindung zwischen der Führungsschiene 2 und dem Führungsrahmen 1 hergestellt. In dieser Position wird dann die Führungsschiene 2 am Führungsrahmen 1 über die Rastvorrichtung 3 verriegelt.

Um diesen verriegelten Zustand zu erreichen, wird die Führungsschiene 2 in einer beispielsweise durch eine Markierung vorgegebenen Position am Führungsrahmen 1 derart angesetzt, dass das Befestigungsmittel 26 der Führungsschiene 2 in die hakenförmige Ausnehmung 12 eingreift. Dann wird mit einer translatorischen Schiebebewegung, die im Wesentlichen parallel zur Erstreckung der Führungsschiene 2 ausgeführt wird, das Befestigungsmittel 26 entlang der hakenförmigen Ausnehmung 12 bis zu deren Anschlag geführt. Durch die spezielle Ausbildung der hakenförmigen Ausnehmung 12 wird dadurch eine formschlüssige Verbindung der Führungsschiene 2 am Führungsrahmen 1 erreicht. Andere Geometrien der Aufnahme 12, als die in den Figuren gezeigten, sind ebenso denkbar. Vorteilhaft ist die Aufnahme 12 jedoch so ausgebildet, dass die Führungsschiene 2 mit dem Führungsrahmen 1 auf einfache Weise und vorteilhaft ohne den Einsatz von Werkzeug verriegelbar ist.

Um ein Herausrutschen des Befestigungsmittels 26, und damit ein Lösen der Führungsschiene 2 vom Führungsrahmen 1 zu verhindern, wird die Führungsschiene 2 mittels der Rastvorrichtung 3, welche einen federbelasteten Rastbolzen 30 aufweist, verriegelt. Der Rastbolzen 30 fällt dabei in eine Rastausnehmung 22 der Führungsschiene 2 ein und verriegelt diese entsprechend in der Position, in welcher das Befestigungsmittel 26 in der hakenförmigen Ausnehmung 12 am Anschlag liegt.

Da der Rastbolzen 30 in Verriegelungsrichtung federbelastet ist, muss der entsprechende Bediener auch keine separaten Schritte zur Herstellung der Verriegelung unternehmen - er muss lediglich die Führungsschiene 2 in einer vorgegebenen Position so an den Führungsrahmen 1 ansetzen, dass das Befestigungsmittel 26 in die Aufnahme 12 eingreift, und dann die Führungsschiene 2 verschieben. Der entsprechende Formschluss wird dann automatisch erreicht und der Rastbolzen 30 fällt aufgrund seiner Federbelastung direkt in die Rastausnehmung 22 der Führungsschiene 2 ein.

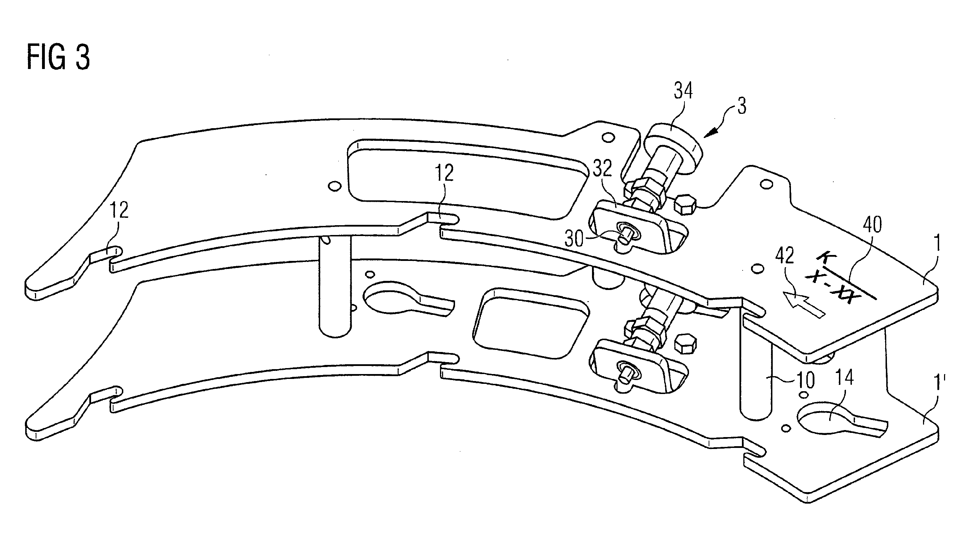

In Figur 3 ist ein Führungsrahmen 1, 1' in einer perspektivischen Ansicht gezeigt, wobei hier die jeweiligen Führungsschienen 2, 2' nicht montiert sind. Klar zu erkennen sind die spezifisch geformten Aufnahmen 12, welche als hakenförmige Ausnehmungen ausgebildet sind. Diese Ausnehmungen ermöglichen zum einen ein einfaches Einführen des Befestigungsmittels 26 und zum anderen wird durch ihre Ausgestaltung ein formschlüssiges Verriegeln der Führungsschiene 2 am Führungsrahmen 1 ermöglicht. Neben den hier gezeigten hakenförmigen Ausnehmungen können jedoch auch anders geformte Aufnahmen 12 für die Befestigungsmittel 26 der Führungsschienen 2 verwendet werden, welche eine formschlüssige Verbindung ermöglichen.

Weiterhin ist der Rastmechanismus 3 mit dem federvorgespannten Rastbolzen 30 gezeigt, wobei hier wiederum klar zu erkennen ist, dass der Rastbolzen 30 in einer Haltevorrichtung 32 verschieblich gehalten wird, so dass er seiner Rastfunktion nachkommen kann, aber gleichzeitig fest am Führungsrahmen 1 gehalten ist, so dass er unverlierbar ist. In einer bevorzugten Variante kann der Rastbolzen 30 so ausgebildet sein, dass er, beispielsweise durch Drehung des Knopfes 34, in der entrasteten Position gehalten werden kann, um ein einfaches Entfernen der jeweiligen Führungsschiene zu ermöglichen.

Auf dem Führungsrahmen 1 ist mittels einer Beschriftung 40 die Position des Führungsrahmens 1 in einer entsprechenden Behälterbehandlungsvorrichtung, beispielsweise einer Reinigungs-, Sterilisierungs-, Füll-, Verschließ-, Etikettier- und/oder Inspektionsvorrichtung, angegeben sowie die mit diesem Führungsrahmen 1 zu verwendenden Führungsschienen 2 spezifiziert. Der auf dem Führungsrahmen 1 aufgebrachte Pfeil 42 deutet in die Demontagerichtung der Führungsschienen, um dem jeweiligen Anlagenbediener die Demontage, und damit das Auswechseln der Führungsschienen 2, zu erleichtern.

In dem unteren Führungsrahmen 1' sind in der Figur 3 weiterhin schlüssellochförmige Ausnehmungen 14 gezeigt, welche dazu dienen, den Führungsrahmen 1, 1' mit einem Maschinenrahmen der jeweiligen Behälterbehandlungsvorrichtung auswechselbar und verriegelbar zu verbinden. Entsprechend kann auch die gesamte Führungsvorrichtung 100, und nicht nur die Führungsschienen 2, an dem jeweiligen Maschinenrahmen ausgetauscht werden, sollte beispielsweise ein anderer Abstand zwischen den beiden Führungsrahmen 1, 1' für eine entsprechende Behältergeometrie erforderlich sein. In einer Variante oder Weiterbildung können auch die Verbindungsbolzen 10 austauschbar gestaltet sein, um einen anderen Abstand zwischen den Führungsrahmen 1, 1' einzustellen. Der Abstand zwischen den Führungsrahmen 1, 1' kann auch mittels eines verstellbaren Abstandselements, beispielsweise eines Spindeltriebes, verstellt werden und entsprechend an die Behältergeometrie angepasst werden.

Aus den Figuren 4 und 6, sowie der entsprechenden Schnittdarstellung entlang der Linie A-A in Figur 5, ergibt sich noch einmal die geometrische Struktur der Führungsschiene 2. Deutlich zu erkennen sind die Rastausnehmung 22 sowie die Befestigungsmittel 26, welche in dem gezeigten Ausführungsbeispiel die Nut 24 überbrücken, um entsprechend ein Gegenstück zu den Aufnahmen 12 des Führungsrahmens 1 zu erhalten.

Die Dimensionierung der Führungsschiene 2, und insbesondere der Leitfläche 20, kann für unterschiedliche Behälter entsprechend unterschiedlich ausgeführt werden. Entsprechend können für unterschiedliche Behälter unterschiedliche Führungsschienen 2 vorgehalten werden, die dann gegeneinander ausgetauscht werden, um die jeweilige Führungsvorrichtung 100 für einen anderen Behältertyp zu rüsten. Mit anderen Worten gibt es mindestens zwei Führungsschienen 2, welche unterschiedliche Dimensionen ihrer Leitfläche 20 aufweisen, und insbesondere unterschiedliche Breiten d, und damit unterschiedliche Abstände der Leitfläche 20 von dem Führungsrahmen 1 haben. Diese unterschiedlich ausgebildeten Führungsschienen 2 werden gegeneinander ausgewechselt, wobei sie dann abwechselnd in der genau identischen Position am Führungsrahmen 1 eingesetzt und verriegelt werden. Auf diese Weise kann durch einfaches Auswechseln der unterschiedlich dimensionierten Führungsschienen 2 eine einfache Einstellung der Führungsvorrichtung an die jeweiligen Gegebenheiten bzw. Erfordernisse der entsprechenden Behälter erreicht werden. Dabei ist beispielsweise mindestens eine erste Führungsschiene 2 mit einer ersten Breite d und entsprechend einem ersten Abstand der Leitfläche 20 von dem Führungsrahmen 1 für erste Behälter vorgesehen, und mindestens eine zweite Führungsschiene 2 mit einer kleineren Breite d und entsprechend einem kleineren Abstand der Leitfläche 20 von der Führungsschiene 1 ist für zweite Behälter vorgesehen, wobei die zweiten Behälter größer dimensioniert sind, als die ersten Behälter. Ein entsprechender Satz von mindestens zwei Führungsschienen 2, welche gegeneinander auswechselbar sind und welche jeweils an der gleichen Position an dem Führungsrahmen 1 verriegelbar sind, ermöglicht entsprechend eine einfache und kosteneffiziente Umrüstung der Führungsvorrichtung auf unterschiedliche Behältergrößen, ohne dass der Führungsrahmen 1 ausgetauscht werden müsste.

Auf der Führungsschiene 2 ist, wie in Figur 4 zu erkennen, auch eine Beschriftung 44 angebracht, welche die jeweilige Position der Führungsschiene 2 an dem Führungsrahmen 1 beschreibt, sowie einen Hinweis auf die vorgesehene Behältergeometrie gibt.

Bei einem Wechsel von einer Flaschengröße auf eine Flaschengröße mit einem größeren Durchmesser kann entsprechend lediglich durch das Auswechseln der Führungsschienen 2, 2' bereits eine vollständige Anpassung der Führungsvorrichtung 100 an die neue Gebindegröße erreicht werden, ohne dass der entsprechende Führungsrahmen 1, 1' ausgetauscht werden müsste. Hieraus ergibt sich, dass zum einen der Wechsel einfach und effizient vorgenommen werden kann, zum anderen aber auch der Materialaufwand für das Vorhalten unterschiedlicher Ausprägungen der Führungsvorrichtung 100 für unterschiedliche Behältergeometrien deutlich reduziert wird, da nun nicht mehr für jede unterschiedliche Behälterform auch Führungsrahmen vorgehalten werden müssen, sondern der Einsatz der hochwertigen Edelstahlmaterialien für die Führungsrahmen deutlich reduziert werden kann.

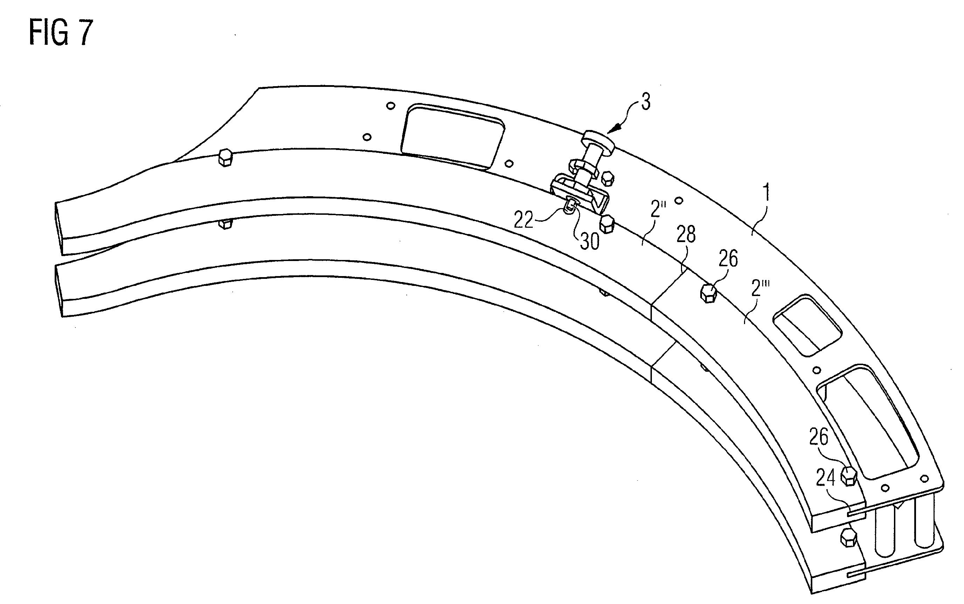

In der in Figur 7 gezeigten Variante sind pro Führungsrahmen 1 zwei Führungsschienen 2", 2"' vorgesehen, welche an einem Verriegelungsanschlag 28 miteinander in Kontakt stehen. Der Aufbau der Aufnahmen im Führungsrahmen 1 sowie der Aufbau der Führungsschienen 2", 2'" bezüglich der Nuten 24 und Befestigungsmittel 26 ist im Wesentlichen identisch zu dem in Figur 1 gezeigten Ausführungsbeispiel. Die zweite Führungsschiene 2'" weist jedoch keine Rastausnehmung 22 auf, sondern wird in der Verriegelungsposition lediglich über den von der Führungsschiene 2" auf den Verriegelungsanschlag 28 ausgeübten Druck gehalten. Lediglich die bei der Montage letzte Führungsschiene 2" weist die entsprechende Rastausnehmung 22 auf, in welche der Rastbolzen 30 eingreift, um mit einem einzigen Rastbolzen 30 sämtliche Führungsschienen 2", 2"' an dem Führungsrahmen 1 zu verriegeln. Auf diese Weise kann ein einfaches Verriegeln von mindestens zwei Führungsschienen 2", 2"' dadurch erreicht werden, dass alle Führungsschienen in die jeweiligen formschlüssigen Schiebeverbindungen eingeschoben werden und lediglich die letzte Führungsschiene 2" mittels der Rastvorrichtung 3 verrastet wird. Hierdurch können weitere Arbeitsschritte, insbesondere beim Demontieren, gespart werden.

Soweit anwendbar können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1, 1': Führungsrahmen
- 10: Verbindungsbolzen
- 12: Aufnahme
- 100: Führungsvorrichtung
- 2, 2', 2", 2"': Führungsschiene
- 20, 20': Leitfläche
- 22: Rastausnehmung
- 24: Nut
- 26: Befestigungsmittel
- 28: Verriegelungsanschlag
- 3: Rastvorrichtung
- 30: Rastbolzen
- 32: Haltevorrichtung für Rastbolzen
- 34: Drehknopf für Rastbolzen
- 40, 42, 44: Beschriftung
- d: Breite der Führungsschiene

## Patentansprüche

1. Führungsvorrichtung (100) für Behälter, insbesondere für Glasflaschen, Kunststoffflaschen, Dosen, Getränkekartons und/oder Kartonagen, mit mindestens einem Führungsrahmen (1, 1'), welcher mit einem Maschinenrahmen einer Behälterbehandlungsvorrichtung verbindbar ist, wobei an dem Führungsrahmen (1, 1') mindestens eine Führungsschiene (2, 2', 2", 2"') mit einer Leitfläche (20, 20') zum Führen der Behälter angeordnet ist, wobei
die Führungsschiene (2, 2', 2", 2"') durch eine formschlüssige Schiebeverbindung mit dem Führungsrahmen (1, 1') verbindbar ist und die Führungsschiene (2, 2', 2", 2"') auswechselbar und am Führungsrahmen (1, 1') über eine Rastvorrichtung (3, 30) verriegelbar ist, **dadurch gekennzeichnet, dass** die Rastvorrichtung (3, 30) ein an dem Führungsrahmen (1, 1') und/oder an der Führungsschiene (2, 2', 2", 2"') unverlierbar angeordneter, federvorgespannter Bolzen ist.

2. Führungsvorrichtung (100) gemäß Anspruch 1, **dadurch gekennzeichnet, dass** die Führungsschiene (2, 2', 2", 2"') eine Nut (24) aufweist, in welche der Führungsrahmen (1, 1') zumindest teilweise einführbar ist.

3. Führungsvorrichtung (100) gemäß Anspruch 2, **dadurch gekennzeichnet, dass** die Nut (24) mindestens ein Befestigungsmittel (26), insbesondere einen Bolzen, aufweist, welches in die Nut (24) hineinragt und welches in eine zum Befestigungsmittel komplementäre Aufnahme (12), insbesondere eine hakenförmige Ausnehmung, am Führungsrahmen (1) einführbar ist.

4. Führungsvorrichtung (100) gemäß einem der vorstehenden Ansprüche, **dadurch gekennzeichnet, dass** mindestens zwei Führungsschienen (2", 2"') an mindestens einem Führungsrahmen (1, 1') angeordnet sind und wenigstens zwei der Führungsschienen (2", 2"') über eine einzige Rastvorrichtung (3, 30) am Führungsrahmen (1, 1') verriegelbar sind.

5. Führungsvorrichtung (100) gemäß Anspruch 4, **dadurch gekennzeichnet, dass** mindestens zwei Führungsschienen (2", 2"') über mindestens einen Verriegelungsanschlag (28) miteinander in Kontakt stehen, wobei die Rastvorrichtung (3, 30) nur mit einer der Führungsschienen (2") in Eingriff bringbar ist und die andere Führungsschiene (2"') durch die mit der Rastvorrichtung in Eingriff stehende Führungsschiene (2") in der Verriegelungsposition verriegelbar ist.

6. Führungsvorrichtung (100) gemäß einem der vorstehenden Ansprüche, **dadurch gekennzeichnet, dass** mindestens zwei Führungsschienen (2, 2', 2", 2"') vorgesehen sind, welche gegeneinander auswechselbar sind und welche jeweils an der gleichen Position am Führungsrahmen (1, 1') verriegelbar sind, wobei mindestens zwei der Führungsschienen (2, 2', 2", 2"') unterschiedliche Dimensionen aufweisen und bevorzugt einen sich voneinander unterscheidenden Abstand ihrer jeweiligen Leitflächen (20, 20') vom Führungsrahmen (1, 1') aufweisen.

7. Führungsvorrichtung (100) gemäß einem der vorstehenden Ansprüche, **dadurch gekennzeichnet, dass** mindestens zwei Führungsrahmen (1, 1') vorgesehen sind, welche alternativ austauschbar mit dem Maschinenrahmen verbindbar sind, wobei die zwei Führungsrahmen zur Führung unterschiedlicher Behälterhöhen ausgebildet sind.

8. Fördervorrichtung für Behälter, insbesondere für Glasflaschen, Kunststoffflaschen, Dosen, Getränkekartons und/oder Kartonagen, mit einer Fördereinrichtung, insbesondere einem Transportstern und/oder einem Förderband, und mit einem die Fördereinrichtung tragenden Maschinenrahmen, wobei ein mit dem Maschinenrahmen verbindbarer Führungsrahmen (1, 1') vorgesehen ist, an welchem mindestens eine Führungsschiene (2, 2', 2", 2"') mit einer Leitfläche (20, 20') zum Führen der Behälter in der Fördereinrichtung angeordnet ist, wobei
die Führungsschiene (2, 2', 2", 2"') durch eine formschlüssige Schiebeverbindung mit dem Führungsrahmen (1, 1') verbindbar ist und die Führungsschiene (2, 2', 2", 2"') auswechselbar und am Führungsrahmen (1,1') über eine Rastvorrichtung (3, 30) verriegelbar ist, **dadurch gekennzeichnet, dass** die Rastvorrichtung (3, 30) ein an dem Führungsrahmen (1, 1') und/oder an der Führungsschiene (2, 2', 2", 2"') unverlierbar angeordneter, federvorgespannter Bolzen ist.

9. Satz von mindestens zwei Führungsschienen (2, 2', 2", 2"'), insbesondere zur Verwendung mit einer Führungsvorrichtung gemäß einem der Ansprüche 1 bis 6, **dadurch gekennzeichnet, dass** die Führungsschienen gegeneinander auswechselbar sind und jeweils an der gleichen Position an einem Führungsrahmen (1, 1') einer Führungsvorrichtung verriegelbar sind, wobei die beiden Führungsschienen (2, 2', 2", 2"') unterschiedliche Dimensionen aufweisen und bevorzugt einen sich voneinander unterscheidenden Abstand ihrer jeweiligen Leitflächen (20, 20') vom Führungsrahmen (1, 1') aufweisen.

## Claims

1. Guiding device (100) for containers, more particularly for glass bottles, plastic bottles, cans, drinks cartons and/or cardboard boxes, with at least one guide frame (1, 1') which can be connected to a machine frame of a container treatment device, wherein on the guide frame (1, 1') at least one guide rail (2, 2' ,2", 2"') with a control surface (20, 20") for guiding the containers is arranged, wherein
the guide rail (2, 2', 2", 2"') can be connected to the guide frame (1. 1') by means of a form fitting slide connection and the guide rail (2, 2', 2", 2"') can be locked on the guide frame (1, 1') in a interchangeable manner via an interlocking device (3, 30) **characterised in that** the interlocking device (3, 30) is a spring-loaded bolt captively arranged on the guide frame (1, 1') and/or on the guide rail (2, 2', 2", 2"').

2. Guiding device (100) according to claim 1 **characterised in that** the guide rail (2, 2', 2", 2"') has a groove (24) into which the guide frame (1, 1') can be at least be partially introduced.

3. Guiding device (100) according to claim 2, **characterised in that** the groove (24) has at least one fastening means (26), more particularly a bolt, which projects into the groove (24) and which can be introduced in a receptacle (12), more particularly a hook-shaped recess, complementary to the fastening means on the guide frame (1).

4. Guiding device (100) according to any one of the preceding claims **characterised in that** at least two guide rails (2", 2"') are arranged on at least one guide frame (1, 1') and at least two of the guide rails (2", 2"') can be locked via a single interlocking device (3, 30) on the guide frame (1, 1 ").

5. Guiding device (100) according to claim 4 **characterised in that** at least two guide rails (2", 2"') are in contact which each other via at least one locking stop (28), wherein the interlocking device (3, 30) can only be brought into engagement with one of the guide rails (2") and the other guide rail (2"') can be locked in the locking position through the guide rail (2") engaging in the interlocking device.

6. Guiding device (100) according to any one of the preceding claims **characterised in that** at least two guide rails (2, 2', 2", 2"') are provided which are interchangeable with each other and which can each be locked to the guide frame (1, 1') at the same position, wherein at least two of the guide rails (2, 2', 2", 2"') have different dimensions and preferably a different distance of their control surface (20, 20') from the guide frame (1, 1').

7. Guiding device (100) according to any one of the preceding claims, **characterised in that** at least two guide frames (1, 1') are provided which can connected to the machine frame in an alternately interchangeable manner, wherein the two guide frames are designed for guiding different container heights.

8. Conveyor device for containers, more particularly for glass bottles, plastic bottles, cans, drinks cartons and/or cardboard boxes, with a conveyor installation, more particularly a transporting star and/or a conveyor belt and a machine frame bearing the conveyor belt, wherein a guide frame (1, 1') connectable to the machine frame is provided on which is arranged at least one guide rail (2, 2', 2", 2"') with a control surface (20, 20') for moving the containers in the conveying direction, wherein the guide rail (2, 2', 2", 2"') can be connected to the guide frame (1. 1') by means of a form fitting slide connection and the guide rail (2, 2', 2", 2"') can be locked on the guide frame (1, 1') in an interchangeable manner via an interlocking device (3, 30) **characterised in that** the interlocking device (3, 30) is a spring-loaded bolt captively arranged on the guide frame (1, 1') and/or on the guide rail (2, 2', 2", 2"').

9. Set of at least two guide rails (2, 2', 2", 2"') more particularly for use with a guiding device according to any one of claims 1 to 6, **characterised in that** the guide rails are interchangeable with each other and can each be locked in the same position on a guide frame (1, 1') of a guiding device, wherein the two guide rails (2, 2', 2", 2"') have different dimensions and preferably a different distance of their control surfaces (20, 20') from the guide frame (1, 1').

## Revendications

1. Dispositif de guidage (100) pour des récipients, notamment pour des bouteilles en verre, des bouteilles en plastique, des boîtes, des cartons à boissons et/ou des cartonnages, avec au moins un châssis de guidage (1, 1') qui peut être assemblé à un châssis de machine d'un dispositif de traitement de récipients, au moins un rail de guidage (2, 2', 2", 2"') étant agencé sur le châssis de guidage (1, 1') avec une surface de guidage (20, 20') pour guider les récipients,
le rail de guidage (2, 2', 2", 2"') pouvant être assemblé au châssis de guidage (1, 1') par un assemblage coulissant à concordance de forme et le rail de guidage (2, 2', 2", 2"') pouvant être échangé et être fixé sur le châssis de guidage (1, 1') par l'intermédiaire d'un dispositif d'enclenchement (3, 30),
**caractérisé en ce que** le dispositif d'enclenchement (3, 30) est un boulon qui est agencé sans risque de perte sur le châssis de guidage (1, 1') ou sur le rail de guidage (2, 2', 2", 2"') et qui est précontraint par un ressort.

2. Dispositif de guidage (100) selon la revendication 1, **caractérisé en ce que** le rail de guidage (2, 2', 2", 2"') comporte une rainure (24) dans laquelle le châssis de guidage (1, 1') peut être introduit au moins en partie.

3. Dispositif de guidage (100) selon la revendication 2, **caractérisé en ce que** la rainure (24) comporte au moins un moyen de fixation (26), notamment un boulon, qui pénètre dans la rainure (24) et qui peut être introduit dans un logement (12), notamment un évidement en forme de crochet, complémentaire du moyen de fixation, sur le châssis de guidage (1).

4. Dispositif de guidage (100) selon l'une des revendications précédentes, **caractérisé en ce qu'**au moins deux rails de guidage (2", 2"') sont agencés sur au moins un châssis de guidage (1, 1') et au moins deux des rails de guidage (2", 2"') peuvent être fixés sur le châssis de guidage (1, 1') par l'intermédiaire d'un unique dispositif d'enclenchement (3, 30).

5. Dispositif de guidage (100) selon la revendication 4, **caractérisé en ce qu'**au moins deux rails de guidage (2", 2"') sont en contact l'un avec l'autre par l'intermédiaire d'au moins une butée de fixation (28), le dispositif d'enclenchement (3, 30) ne pouvant être mis en prise qu'avec l'un des rails de guidage (2") et l'autre rail de guidage (2"') pouvant être fixé dans la position de fixation par le rail de guidage (2") en prise avec le dispositif d'enclenchement.

6. Dispositif de guidage (100) selon l'une des revendications précédentes, **caractérisé en ce qu'**il est prévu au moins deux rails de guidage (2, 2', 2", 2"') qui peuvent être échangés l'un l'autre et être fixés à chaque fois dans la même position sur le châssis de guidage (1, 1'), au moins deux des rails de guidage (2, 2', 2", 2"') ayant des dimensions différentes et ayant de préférence une distance différente de leurs surfaces de guidage respectives (20, 20') au châssis de guidage (1,1').

7. Dispositif de guidage (100) selon l'une des revendications précédentes, **caractérisé en ce qu'**il est prévu au moins deux châssis de guidage (1, 1') qui peuvent être assemblés au châssis de machine de manière à pouvoir être échangés alternativement, les deux châssis de guidage étant conçus pour le guidage de récipients de hauteurs différentes.

8. Dispositif de transport pour des récipients, notamment pour des bouteilles en verre, des bouteilles en plastique, des boîtes, des cartons à boissons et/ou des cartonnages, avec un dispositif transporteur, notamment un transporteur en étoile et/ou un convoyeur à bande, et avec un châssis de machine portant le dispositif transporteur, dans lequel il est prévu un châssis de guidage (1, 1') qui peut être assemblé au châssis de machine et sur lequel au moins un rail de guidage (2, 2', 2", 2"') est agencé avec une surface de guidage (20, 20') pour guider les récipients dans le dispositif transporteur,
le rail de guidage (2, 2', 2", 2"') pouvant être assemblé au châssis de guidage (1, 1') par un assemblage coulissant à concordance de forme et le rail de guidage (2, 2', 2", 2"') pouvant être échangé et être fixé sur le châssis de guidage (1, 1') par l'intermédiaire d'un dispositif d'enclenchement (3, 30),
**caractérisé en ce que** le dispositif d'enclenchement (3, 30) est un boulon qui est agencé, sans risque de perte, sur le châssis de guidage (1, 1') ou sur le rail de guidage (2, 2', 2", 2"') et qui est précontraint par un ressort.

9. Ensemble d'au moins deux rails de guidage (2, 2', 2", 2"'), notamment pour une utilisation avec un dispositif de guidage selon l'une des revendications 1 à 6, **caractérisé en ce que** les rails de guidage peuvent être échangés l'un l'autre et être fixés à chaque fois dans la même position sur un châssis de guidage (1, 1') d'un dispositif de guidage, les deux rails de guidage (2, 2', 2", 2"') ayant des dimensions différentes et ayant de préférence une distance différente de leurs surfaces de guidage respectives (20, 20') au châssis de guidage (1,1').
